# EUROPEAN PATENT APPLICATION

(11) **EP 1 137 302 A1**
(43) Date of publication of application: **26.09.2001**
(21) Application number: 00961171.6
(22) Date of filing: 22.09.2000
(51) Int. Cl.: H04Q 7/38

(54) **COMMUNICATION TERMINAL AND METHOD FOR SELECTING TRANSMITTING STATION**

(30) Priority: 30.09.1999 JP 27860199
(71) Applicant: MATSUSHITA ELECTRIC INDUSTRIAL CO., LTD., Kadoma-shi, Osaka 571-8501 (JP)
(72) Inventor: KANEMOTO, Hideki, Yokosuka-shi, Kanagawa 239-0847 (JP); KATO, Osamu, Yokosuka-shi, Kanagawa 237-0066 (JP)
(74) Representative: Grünecker, Kinkeldey, Stockmair & Schwanhäusser Anwaltssozietät
(86) International application number: JP0006486
(87) International publication number: WO0124564

(57) **Abstract**

The communication terminal apparatus in the process of soft handover selects a base station apparatus to send a forward link signal for every information unit at the base station apparatus based on the determination of the qualities of forward links from a plurality of base station apparatuses and the selected station apparatus sends a forward link message signal. Or when the difference between the reception power of the forward link signal from the selected base station apparatus and the maximum reception power of the forward link signals from other base station apparatuses exceeds a predetermined value, the communication terminal apparatus selects the base station apparatus sending the forward link signal that displays said maximum power.

## Description

### Technical Field

The present invention relates to a communication terminal apparatus and transmission station selection method used in a digital radio communication system.

### Background Art

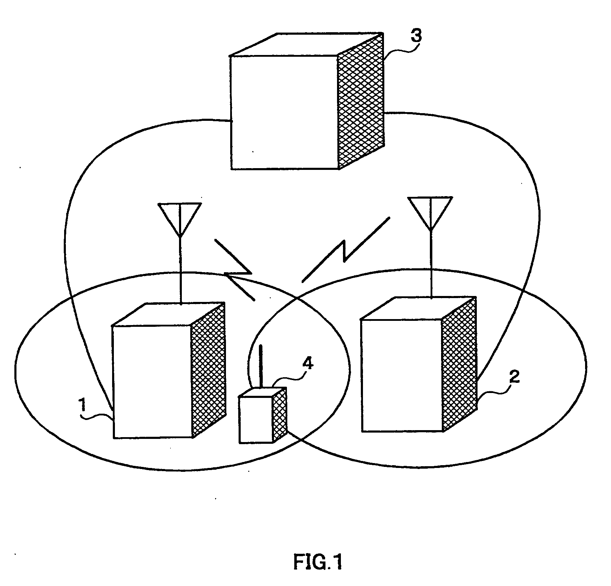

FIG.1 is a drawing to explain an outline of handover during which a communication terminal in a conventional digital radio communication system switches between base stations with which to communicate.

When communication terminal 4 carries out soft handover from first base station 1 with which communication terminal 4 is actually communicating to second base station 2 with which communication terminal 4 will enter into communication, communication terminal 4 communicates with both the first and second base stations. At this time, control station 3 selects the signal with a better reception condition from the two signals from the first and second base stations and combines an information unit using the selected reception signal as a transmission signal from the communication terminal.

During soft handover, the communication terminal is communicating with a plurality of base stations simultaneously and the plurality of base stations is each sending a forward link signal to the relevant communication terminal. The communication terminal receives the forward link signals from the plurality of base stations, combines transmission units of the plurality of forward link signals to form an information unit.

Thus, when the communication terminal is in the process of handover, simultaneously using forward links from a plurality of base stations in communication increases interference signals against other communication terminals, restricting the capacity of communication terminals accommodated in the cell under the control of each base station. Therefore, the Unexamined Japanese Patent Publication No.HEI 11-69416 discloses a technology whereby only a base station with a forward link of better reception quality at the communication terminal sends the forward link signal to the relevant communication terminal and other base stations do not send forward link signals, thus reducing interference of forward links.

However, in a situation such as handover where signal propagation near the cell boundary is unstable, even if the relevant communication terminal selects and replaces with a base station with better channel quality from among base stations that send forward link signals to the relevant communication terminal based on the quality of the forward link of each transmission unit. at the communication terminal, the quality of the forward link signal from the base station may deteriorate and may not be received correctly by the communication terminal.

That is, when a base station sending a forward link signal is switched during transmission of a plurality of transmission units that make up information units of signals at the communication terminal, since the base station to which the communication is switched has not been the target of transmit power control with the communication terminal so far, the transmission unit may be received erroneously by the communication terminal due to nonconformity of transmission power control of the forward link or drastic quality deterioration caused by transmission errors of transmit power control information produced before the changeover. In this case, the problem is that the communication terminal may fail to configure the information units correctly and the information units need to be resent after all, thus failing to perform efficient communications.

### Disclosure of Invention

It is an object of the present invention to provide a communication terminal apparatus and transmission station selection method capable of optimally selecting/combining reception signals and carrying out efficient radio communications.

A subject of the present invention is to provide a communication terminal that selects a base station apparatus that will send a signal in the next information unit based on the quality of the information unit of forward links from a plurality of base station apparatuses, avoid transmission over forward links of poor quality to reduce interference of forward links, suppress excessive switching between base station apparatuses sending forward link signals and optimally operate combination by the communication terminal, thus allowing efficient radio communications.

Another subject of the present invention is to allow the communication terminal apparatus to optimally operate combination of reception signals and realize efficient radio communications when the reception power of forward link signals from other base stations is greater than the reception power of a forward link signal from the base station apparatus with which the communication terminal apparatus is currently communicating and the power difference exceeds predetermined power, by selecting a base station apparatus having the maximum power of forward link signal.

### Brief Description of Drawings

FIG.1 illustrates a communication terminal apparatus that carries out soft handover and base station apparatuses;
FIG.2 is a block diagram showing a configuration of a communication terminal apparatus according to Embodiment 1 of the present invention;
FIG.3 is an outline showing the reception quality and selection statuses of base station apparatuses that send forward link signals during soft handover of the communication terminal apparatus according to the embodiment above;
FIG.4 is a block diagram showing a configuration of a communication terminal apparatus according to Embodiment 2 of the present invention; and
FIG.5 is an outline showing the reception quality and selection statuses of base station apparatuses that send forward link signals during soft handover of the communication terminal apparatus according to the embodiment above.

### Best Mode for carrying out the Invention

### (Embodiment 1)

With reference now to the attached drawings, embodiments of the present invention will be explained in detail below.

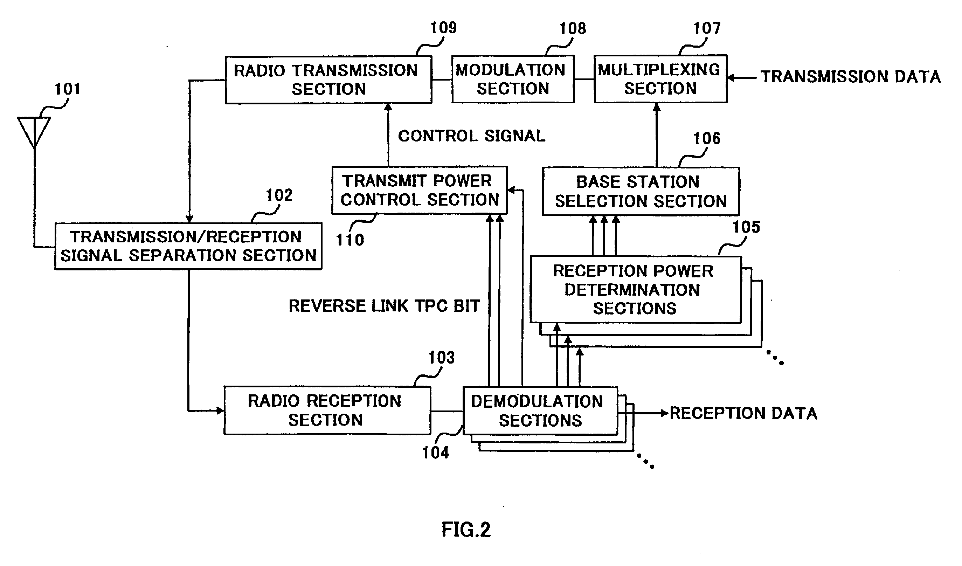

FIG.2 is a block diagram showing a configuration of a communication terminal apparatus according to Embodiment 1 of the present invention. A signal sent from the other end of communication is received by radio reception section 103 via antenna 101 and transmission/reception signal separation section 102. The reception signal is subjected to predetermined radio reception processing by radio reception section 103, sent to demodulation sections 104 corresponding to their respective base station signals, demodulated as signals from a plurality of base stations and output as reception data.

On the other hand, the outputs of demodulation sections 104 are each sent to their respective reception power determination sections 105 where the reception quality in an immediately preceding information unit, for example, power of reception signals from their respective base station apparatuses is determined. The determination results of reception power determination sections 105 are sent to base station selection section 106.

Base station selection section 106 selects a base station apparatus displaying the best reception quality (reception power) based on the determination result from reception power determination sections 105. The communication terminal apparatus proceeds with a changeover to the base station apparatus selected in this way. Then, base station selection section 106 creates base station selection information indicating that this base station apparatus is the base station apparatus with which the communication terminal apparatus will communicate in the next information unit. This base station selection information is sent to multiplexing section 107 and multiplexed with transmission data by multiplexing section 107. The multiplexed data is sent to modulation section 108, digital-modulated by modulation section 108 and sent to radio transmission section 109.

On the other hand, the outputs of demodulation sections 104 are input to transmit power control section 110. Transmit power control section 110 determines transmit power information of reverse links from TPC (Transmit Power Control) bits of reception signals and sends a control signal to radio transmission section 109 according to the reverse link transmit power information.

Radio transmission section 109 performs predetermined radio transmission processing on the transmission data to transform it to a transmission signal and sends the transmission signal from antenna 101 via transmission/reception separation section 102. At this time, transmit power is controlled according to the control signal from transmit power control section 110.

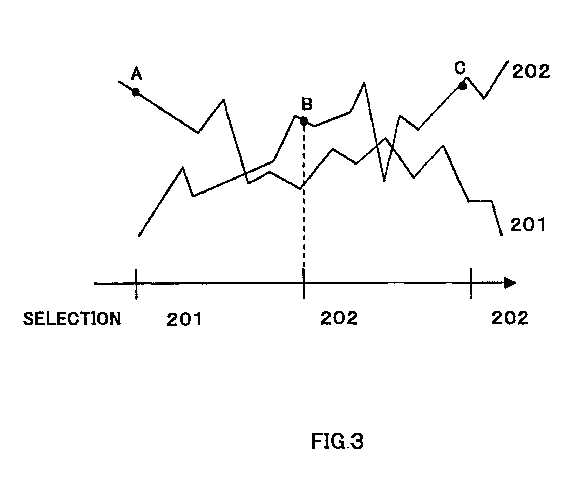

Then, the operation of the communication terminal apparatus in the above configuration will be explained using FIG.3. In FIG.3, solid line 201 expresses a variation of signal power from a first base station apparatus during soft handover and solid line 202 expresses a variation of signal power from a second base station apparatus during soft handover. This signal power is the power determined by each reception power determination section 105.

Delimiters on the horizontal axis in FIG.3 indicate signal information units. Furthermore, symbol strings described below the horizontal axis indicate base station apparatuses that send forward link signals and express the selection statuses of the base station apparatuses. In these selection statuses, reference numeral 201 indicates that the first base station apparatus is selected and reference numeral 202 indicates that the second base station apparatus is selected. In FIG.3, a base station apparatus from which a communication terminal apparatus receive a signal with higher signal power at a point in time expressed by a black point is selected as the next information unit. This selection is made by base station selection section 106.

More specifically, in a signal power comparison at point A, the power of the signal from the first base station apparatus is higher, and therefore the first base station apparatus is selected as the next information unit (201). Then, in the information unit, the first base station apparatus is regarded as the transmission base station apparatus (base station apparatus that sends a forward link signal).

Then, in a signal power comparison at point B, the power of the signal from the second base station apparatus is higher, and therefore the second base station apparatus is selected as the next information unit (202). Then, in the information unit, the first base station apparatus, which is the current transmission base station apparatus, is switched to the second base station apparatus and the second base station apparatus is regarded as the transmission base station apparatus.

Furthermore, in a signal power comparison at point C, the power of the signal from the second base station apparatus is higher in like manner, and therefore the second base station apparatus is selected as the next transmission base station apparatus (202). Then, in the information unit, the second base station apparatus, which is the current transmission base station apparatus, is kept and the second base station apparatus is regarded as the transmission base station apparatus.

The communication terminal apparatus sends this selection information to the first and second base station apparatuses during soft handover. The first and second base station apparatuses perform transmit control according to the selection information.

When the selection information is not of the own base station apparatus, it is preferable for the base station apparatus to send only a control signal and send no message signal to the communication terminal apparatus. Thus, a base station apparatus, which is not selected as a base station apparatus to send a forward link signal, sends only a control signal and sends no message signal to the communication terminal apparatus, and can thereby reduce interference signals against the forward link while maintaining radio connections with the communication terminal apparatus.

It is also preferable, when the base station apparatus sends the selected forward link signal, that the base station apparatus reflect the transmit power control information from the communication terminal while no transmission is being performed on the forward link and send the forward link signal with surplus power added. For example, +3dB is added as surplus power. This compensates for nonconformity of transmit power due to transmission errors, etc. of transmit power control information from the communication terminal while no forward link is being transmitted, making it possible to reliably send the forward link signal to the communication terminal.

Thus, the communication terminal apparatus selects a base station displaying favorable forward link signal power immediately before the signal information unit from among the base station apparatuses in communication during soft handover, avoids successively switching between base stations according to a variation of the quality of the forward link signal and carries out no switching of base station apparatus in the information unit. In this way, it is possible to reduce the amount of control in selection of a base station without excessive switching of forward link transmission base stations and reliably receive forward links. Therefore, this allows the communication terminal to correctly configure the information unit and realize efficient radio communications. Furthermore, since no forward link signal is sent from a base station apparatus with a forward link signal of poor quality, it is possible to improve the frequency utilization efficiency and reduce interference of forward links.

Furthermore, since the communication terminal apparatus determines transmit power and performs transmit power control based on transmit power control information from a plurality of base station apparatuses in communication during soft handover (in consideration of transmit power control information of a plurality of base station apparatuses), it is possible to realize effective transmit power control over a plurality of base station apparatuses in communication. Thus, it is possible to reliably carry out handover, providing efficient radio communications.

It is preferable for the communication terminal apparatus of this embodiment to determine the quality based on the reception power of a signal common to forward links. This makes it possible to determine the qualities of forward links from a plurality of base station apparatuses easily and without significant errors and effectively select a base station apparatus to send a forward link.

Furthermore, it is also preferable for the communication terminal apparatus of this embodiment to select a base station apparatus with largest reception power of the signal in the last part of the immediately preceding information unit. This makes it possible to select a base station apparatus that will provide an optimal forward link quality in the next information unit from among forward link signals of a plurality of base station apparatuses allowing the communication terminal apparatus to receive forward link signals reliably. This eliminates the need for retransmission, allowing efficient radio communications.

### (Embodiment 2)

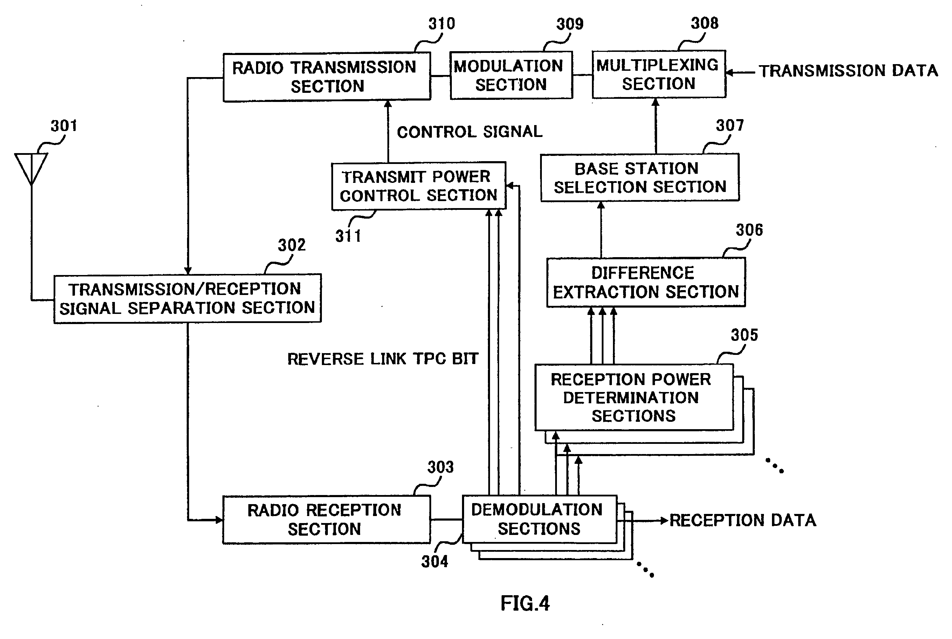

FIG.4 is a block diagram showing a configuration of a communication terminal apparatus according to Embodiment 2 of the present invention. A signal sent from the other end of communication is received by radio reception section 303 via antenna 301 and transmission/reception signal separation section 302. The reception signal is subjected to predetermined radio reception processing by radio reception section 303, sent to demodulation sections 304 corresponding to respective base station signals, demodulated as signals from a plurality of base stations and output as reception data.

On the other hand, the outputs of demodulation sections 304 are each sent to their respective reception power determination sections 305 where the reception quality, for example, power of reception signals from the respective base station apparatuses is determined. The determination results (power values) of reception power determination sections 305 are sent to difference extraction section 306. Difference extraction section 306 compares the signal power from the currently selected base station apparatus and the signal power from other base station apparatuses, determines differences between the signal power from the currently selected base station apparatus and the signal power from other base station apparatuses having greater signal power than the currently selected base station apparatus and extracts the largest difference value. This difference value is sent to base station selection section 307.

Base station selection section 307 determines whether the difference value exceeds a predetermined value or not and when the difference value exceeds the predetermined value, selects the base station apparatus as the transmission base station apparatus (base station apparatus to send a forward link signal). Then, the communication terminal apparatus proceeds with a changeover to the base station apparatus selected in this way. Furthermore, base station selection section 307 creates base station selection information indicating that this base station apparatus is the base station apparatus with which the communication terminal apparatus will communicate next. This base station selection information is sent to multiplexing section 308 and multiplexed with transmission data by multiplexing section 308. The multiplexed data is sent to modulation section 309, digital-modulated by modulation section 309 and sent to radio transmission section 310.

On the other hand, the outputs of demodulation sections 304 are input to transmit power control section 311. Transmit power control section 311 determines transmit power information of reverse links from reverse link TPC bits in respective reception signals and sends a control signal to radio transmission section 310 according to the reverse link transmit power information.

Radio transmission section 310 performs predetermined radio transmission processing on the transmission data to transform it to a transmission signal and sends the transmission signal from antenna 301 via transmission/reception separation section 302. At this time, transmit power is controlled according to the control signal from transmit power control section 311.

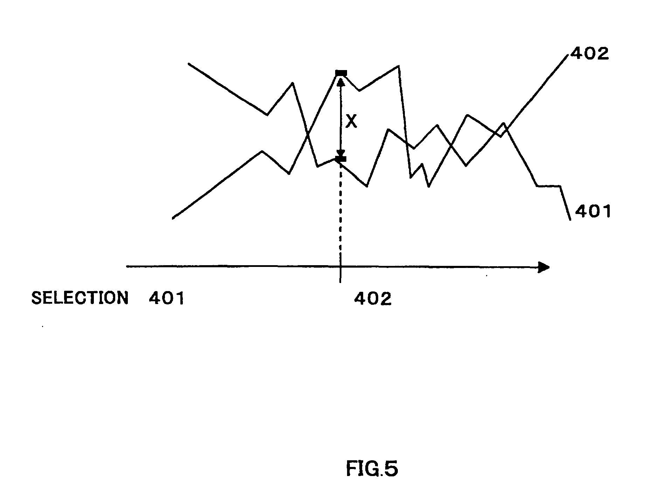

Then, the operation of the communication terminal apparatus in the above configuration will be explained using FIG.5. In FIG.5, solid line 401 expresses a variation of signal power from a first base station apparatus during soft handover and solid line 402 expresses a variation of signal power from a second base station apparatus during soft handover. This signal power is the power determined by each reception power determination section 305.

Furthermore, symbol strings described below the horizontal axis indicate base station apparatuses that send forward link signals and indicate selection statuses of the base station apparatuses. In these selection statuses, reference numeral 401 indicates that the first base station apparatus is selected and reference numeral 402 indicates that the second base station apparatus is selected.

In FIG.5, when the currently selected (currently communicating) base station apparatus is the first base station apparatus, a difference from the signal power of other base station apparatuses having greater signal power than that of the first base station apparatus is measured and when the base station apparatus corresponding to the maximum difference value is the second base station apparatus, it is determined whether this difference value X exceeds a predetermined value or not. This determination is made by base station selection section 307. Furthermore, difference extraction section 306 extracts the largest difference value from among difference values of signal power of a plurality of other base station apparatuses having greater signal power than the signal power of the currently selected base station apparatus.

Then, when difference value X exceeds a predetermined value, the second base station apparatus is selected (402). From that point on, the second base station apparatus is regarded as the transmission base station apparatus (base station apparatus that sends a forward link signal) . On the other hand, when difference value X does not exceed the predetermined value, the first base station apparatus remains selected (401).

By the way, the predetermined value, which becomes the selection reference can be fixed or changed according to the propagation environment as appropriate.

The communication terminal apparatus sends this selection information to the first and second base station apparatuses during soft handover. The first and second base station apparatuses perform transmit control according to the selection information.

When the selection information is not of the own base station apparatus, it is preferable for the base station apparatus to send only a control signal and send no message signal to the communication terminal apparatus. Thus, a base station apparatus, which is not selected as a base station apparatus to send a forward link signal, sends only a control signal and sends no message signal to the communication terminal apparatus, and can thereby reduce interference signals against the forward link while maintaining radio connection with the communication terminal apparatus.

The communication terminal apparatus according to this embodiment switches between forward link transmission base stations when the difference between the maximum forward link signal transmit power from all base station apparatuses in communication during soft handover and the forward link signal power of the selected base station apparatus exceeds a predetermined value.

Thus, with respect to the base station apparatus to send a forward link signal, the communication terminal apparatus according to this embodiment does not successively carry out a changeover to a base station apparatus that sends the maximum signal power according to a variation of the signal quality of the forward link, but carries out a changeover using a predetermined power difference as a margin and taking into account the variation of the reception quality, and can thereby prevent excessive switching between base station apparatuses to send forward link signals and allow efficient radio communications.

Furthermore, since the communication terminal apparatus determines transmit power and performs transmit power control based on transmit power control information from a plurality of base station apparatuses in communication during soft handover (taking into account transmit power of a plurality of base station apparatuses), it is possible to realize effective transmit power control over a plurality of base station apparatuses in communication. Thus, it is possible to reliably carry out handover and provide efficient radio communications.

The communication terminal apparatus according to this embodiment adopts a configuration comprising a reception section that receives signals from a plurality of base station apparatuses, a base station selection section that selects a base station apparatus with which to communicate for every information unit of the signal based on the quality of the signal and a transmission section that sends the selection information of the base station selection section to the plurality of base station apparatuses.

According to this configuration, during soft handover during which the communication terminal communicates with a plurality of base station apparatuses, the communication terminal apparatus determines the quality of forward link signals from a plurality of base station apparatuses and selects a base station apparatus with optimal forward link signal quality as the transmission station in the next information unit, and can thereby obtain reception signals of good quality. Furthermore, the communication terminal apparatus prevents base station apparatuses with forward link signals of poor quality from sending forward link signals, and can thereby improve the frequency utilization efficiency and reduce interference of forward links.

Furthermore, in a poor propagation path environment near the cell boundary where handover takes place, the communication terminal apparatus does not successively switch between base station apparatuses to send forward link signals according to a variation of the qualities of forward link signals but switches for every information unit, and can thereby reduce the amount of control in selection of a base station apparatus without producing excessive switching and reliably receive forward link signals. This makes it possible to correctly configure the information unit and allow efficient radio communications.

In the communication terminal apparatus of the present invention in the above configuration, the base station selection section comprises a quality determination section that determines the quality based on the reception power of a common signal to forward links.

According to this configuration, it is possible to determine the qualities of forward links from a plurality of base station apparatuses easily and without significant errors and effectively select a base station apparatus to send a forward link.

In the communication terminal apparatus of the present invention in the above configuration, the base station selection section adopts a configuration to select a base station apparatus with the maximum reception power of the common signal in the last part of the immediately preceding information unit.

According to this configuration, it is possible to select a base station apparatus that provides an optimal forward link quality in the next information unit from among forward link signals from a plurality of base station apparatuses and the communication terminal can reliably receive forward link signals. This eliminates the need for retransmission and allows efficient radio communications.

The base station apparatus of the present invention adopts a configuration, when selected to start transmission of a forward link signal, to reflect power control information from the communication terminal while no forward link is being transmitted and send forward link signals with surplus power added.

According to this configuration, the base station apparatus that starts transmission of a forward link signal sends the forward link signal with surplus power added even when transmit power of the forward link is not controlled appropriately due to transmission errors, etc. of power control information from the communication terminal while no transmission is being performed, thus allowing reliable transmission of signals to the communication terminal.

The communication terminal apparatus of the present invention adopts a configuration comprising a reception section that receives signals from a plurality of base station apparatuses, a base station selection section that selects a base station apparatus other than the currently selected base station apparatus when the reception power of a common signal from the base station apparatuses other than the selected base station apparatus is greater than the reception power of the common signal from the currently selected base station apparatus and the power difference exceeds a predetermined value, and a transmission section that sends the selection information of the base station selection section to the plurality of base station apparatuses.

According to this configuration, with respect to the base station apparatus to send a forward link signal, the communication terminal apparatus does not successively carry out a changeover to a base station apparatus that sends the maximum signal power according to a variation of the signal quality of the forward link, but carries out a changeover using a predetermined power difference as a margin and taking into account the variation of the reception quality, and can thereby prevent excessive switching between base station apparatuses to send forward link signals and allow efficient radio communications.

The base station apparatus of the present invention adopts a configuration comprising a reception section that receives selection information from the communication terminal apparatus in the above configuration and a control section that controls the transmission to the communication terminal apparatus based on the selection information.

This configuration allows the base station apparatus to perform efficient radio communications without excessive switching, thus reducing burden on the apparatus.

The base station apparatus of the present invention in the above configuration adopts a configuration with the control section sending only a control signal and sending no message signal to the communication terminal apparatus when the selection information is not of the own base station.

According to this configuration, base station apparatuses that are not selected as the base station apparatus to send a forward link signal send only a control signal and send no message signal to the communication terminal apparatus and can thereby reduce interference signals against the forward link signals while maintaining radio connections with the communication terminal apparatus.

The transmission station selection method of the present invention comprises, on the communication terminal side, a receiving step of receiving signals from a plurality of base station apparatuses, a base station selecting step of selecting a base station apparatus with which to communicate for every information unit of the signal based on the quality of the signal, a transmitting step of transmitting the selection information in the base station selection step to the plurality of base station apparatuses, and comprises on the base station side, a receiving step of receiving the switching information and a controlling step of controlling the transmission to the communication terminal apparatus based on the selection information.

According to this method, during soft handover during which the communication terminal communicates with a plurality of base station apparatuses, the communication terminal apparatus determines the quality of forward link signals from a plurality of base station apparatuses and selects a base station apparatus with a forward link signal of good quality as the transmission station in the next information unit and can thereby obtain reception signals of good quality. Furthermore, since the communication terminal apparatus prevents base station apparatuses with forward links of poor quality from sending forward link signals and can thereby improve the frequency utilization efficiency and reduce interference of forward links.

Furthermore, in a poor propagation path environment near the cell boundary where handover takes place, the communication terminal apparatus does not successively switch between base station apparatuses to send forward link signals according to a variation of the quality of forward link signals but switches for every information unit and can thereby reduce the amount of control in selection of a base station apparatus without producing excessive switching and reliably receive forward link signals. This makes it possible to correctly configure the information unit and allow efficient radio communications.

The transmission station selection method of the present invention comprises, on the communication terminal side, a receiving step of receiving signals from a plurality of base station apparatuses, a base station selecting step of selecting a base station apparatus other than the currently selected base station apparatus when the reception power of a common signal from the base station apparatuses other than the selected base station apparatus is greater than the reception power of the common signal from the currently selected base station apparatus and the power difference exceeds a predetermined value, a transmitting step of transmitting the selection information in the base station selecting step to the plurality of base station apparatuses, and comprises on the base station apparatus side, a receiving step of receiving the selection information and a controlling step of controlling the transmission to the communication terminal apparatus based on the selection information.

According to this method, with respect to the base station apparatus to send a forward link signal, the communication terminal apparatus does not successively carry out a changeover to a base station apparatus that sends the maximum signal power according to a variation of the signals quality of the forward link, but carries out a changeover using a predetermined power difference as a margin and taking into account the variation of the reception quality, and can thereby prevent excessive switching between base station apparatuses to send forward link signals and allow efficient radio communications.

As described above, the communication terminal apparatus and transmission station selection method of the present invention determines the quality of forward link signals from a plurality of base station apparatuses during soft handover and selects a base station apparatus with a forward link signal of good quality as the transmission based station in the next information unit and can thereby obtain reception signals of good quality. Furthermore, the communication terminal apparatus and transmission station selection method of the present invention prevents base station apparatuses with forward links of poor quality from sending forward link signals and can thereby improve the frequency utilization efficiency and reduce interference of forward links.

Furthermore, in a poor propagation path environment near the cell boundary where handover takes place, the communication terminal apparatus and transmission station selection method of the present invention does not successively switch between base station apparatuses that send forward link signals according to a variation of the quality of forward link signals but switches for every information unit and can thereby receive forward link signals without producing excessive switching. This makes it possible to correctly configure the information unit and allow efficient radio communications.

Furthermore, the communication terminal apparatus and transmission station selection method of the present invention selects a base station apparatus displaying the maximum forward link signal power when the power difference between the reception power of the forward link signal from the currently communicating base station apparatus and the reception power of forward link signals from other base station apparatuses exceeds predetermined power, and with respect to the base station apparatus to send a forward link signal, does not successively carry out a changeover to a base station apparatus that sends the maximum signal power according to a variation of the signal quality of the forward link, but carries out a changeover using a predetermined power difference as a margin and taking into account the variation of the reception quality, thus making it possible to prevent excessive switching between the base station apparatuses that send forward link signals and allow efficient radio communications.

This application is based on the Japanese Patent Application No.HEI 11-278601 filed on September 30, 1999, entire content of which is expressly incorporated by reference herein.

### Industrial Applicability

The present invention is applicable to a communication terminal apparatus used in a digital radio communication system.

## Claims

1. A communication terminal apparatus comprising:
receiving means for receiving signals from a plurality of base station apparatuses;
base station selecting means for selecting a base station apparatus with which to communicate for every selection/combination unit of said signal based on the quality of said signal; and
transmitting means for transmitting the selection information of said base station selecting means to said plurality of base station apparatuses.

2. The communication terminal apparatus according to claim 1, wherein said base station selecting means comprises quality determining means for determining the quality based on the reception power of a common signal of forward links.

3. The communication terminal apparatus according to claim 2, wherein said base station selecting means selects a base station apparatus corresponding to the maximum reception power of said common signal in the last part of the immediately preceding selection/combination unit.

4. A communication terminal apparatus comprising:
receiving means for receiving signals from a plurality of base station apparatuses;
base station selecting means for selecting a base station apparatus other than the currently selected base station apparatus when the reception power of a common signal from base station apparatuses other than said selected base station apparatus is greater than the reception power of a common signal of said selected base station apparatus and the power difference thereof exceeds a predetermined value; and
transmitting means for transmitting the selection information of said base station selecting means to said plurality of base station apparatuses.

5. A base station apparatus selected by the communication terminal apparatus according to claim 1 that reflects power control information from the communication terminal apparatus while no forward link is being transmitted and sends forward links with surplus power added.

6. A base station apparatus comprising:
receiving means for receiving the selection information from the communication terminal apparatus according to claim 1; and
controlling means for controlling the transmission to said communication terminal apparatus based on said selection information.

7. The base station apparatus according to claim 5, wherein said controlling means sends only a control signal and sends no message signal to said communication terminal apparatus when the selection information indicates that the own base station apparatus is not selected.

8. A transmission station selection method with a communication terminal side comprising:
a receiving step of receiving signals from a plurality of base station apparatuses;
a base station selecting step of selecting a base station apparatus with which to communicate for every selection/combination unit of said signal based on the quality of said signal;
a transmitting step of transmitting the selection information in said base station selecting step to said plurality of base station apparatuses, and with the base station apparatus side comprising:
a receiving step of receiving said switching information; and
a controlling step of controlling the transmission to said communication terminal apparatus based on said selection information.

9. A transmission station selection method with a communication terminal side comprising:
a receiving step of receiving signals from a plurality of base station apparatuses;
a base station selecting step of selecting a base station apparatus other than the currently selected base station apparatus when the reception power of a common signal from base station apparatuses other than said selected base station apparatus is greater than the reception power of a common signal of said selected base station apparatus and the power difference thereof exceeds a predetermined value; and
a transmitting step of transmitting the selection information in said base station selecting step to said plurality of base station apparatuses, and with the base station apparatus side comprising:
a receiving step of receiving said selection information; and
a controlling step of controlling the transmission to said communication terminal apparatus based on said selection information.

## Amended claims

### Amended claims under Art. 19.1 PCT

1. (Amended) A communication terminal apparatus comprising:
receiving means for receiving signals from a plurality of base station apparatuses;
base station selecting means for selecting a base station apparatus with which to communicate for every information unit of said signal based on the quality of said signal; and
transmitting means for transmitting the selection information of said base station selecting means to said plurality of base station apparatuses.

2. The communication terminal apparatus according to claim 1, wherein said base station selecting means comprises quality determining means for determining the quality based on the reception power of a common signal of forward links.

3. (Amended) The communication terminal apparatus according to claim 2, wherein said base station selecting means selects a base station apparatus corresponding to the maximum reception power of said common signal in the last part of the immediately preceding information unit.

4. A communication terminal apparatus comprising:
receiving means for receiving signals from a plurality of base station apparatuses;
base station selecting means for selecting a base station apparatus other than the currently selected base station apparatus when the reception power of a common signal from base station apparatuses other than said selected base station apparatus is greater than the reception power of a common signal of said selected base station apparatus and the power difference thereof exceeds a predetermined value; and
transmitting means for transmitting the selection information of said base station selecting means to said plurality of base station apparatuses.

5. A base station apparatus selected by the communication terminal apparatus according to claim 1 that reflects power control information from the communication terminal apparatus while no forward link is being transmitted and sends forward links with surplus power added.

6. A base station apparatus comprising:
receiving means for receiving the selection information from the communication terminal apparatus according to claim 1; and
controlling means for controlling the transmission to said communication terminal apparatus based on said selection information.

7. The base station apparatus according to claim 5, wherein said controlling means sends only a control signal and sends no message signal to said communication terminal apparatus when the selection information indicates that the own base station apparatus is not selected.

8. (Amended) A transmission station selection method with a communication terminal side comprising:
a receiving step of receiving signals from a plurality of base station apparatuses;
a base station selecting step of selecting a base station apparatus with which to communicate for every information unit of said signal based on the quality of said signal;
a transmitting step of transmitting the selection information in said base station selecting step to said plurality of base station apparatuses, and with the base station apparatus side comprising:
a receiving step of receiving said switching information; and
a controlling step of controlling the transmission to said communication terminal apparatus based on said selection information.

9. A transmission station selection method with a communication terminal side comprising:
a receiving step of receiving signals from a plurality of base station apparatuses;
a base station selecting step of selecting a base station apparatus other than the currently selected base station apparatus when the reception power of a common signal from base station apparatuses other than said selected base station apparatus is greater than the reception power of a common signal of said selected base station apparatus and the power difference thereof exceeds a predetermined value; and
a transmitting step of transmitting the selection information in said base station selecting step to said plurality of base station apparatuses, and with the base station apparatus side comprising:
a receiving step of receiving said selection information; and
a controlling step of controlling the transmission to said communication terminal apparatus based on said selection information.
